Europäisches Patentamt

European Patent Office

Office européen des brevets

(11) Veröffentlichungsnummer: **0 309 824 B1**

## (12) EUROPÄISCHE PATENTSCHRIFT

(45) Veröffentlichungstag der Patentschrift:
13.11.91 Patentblatt 91/46

(51) Int. Cl.⁵: **G05B 19/18**

(21) Anmeldenummer: **88115135.1**

(22) Anmeldetag: **15.09.88**

(54) Verfahren zur numerisch gesteuerten Lageregelung elektromotorisch angetriebener Achsen.

(30) Priorität: **28.09.87 DE 3732632**

(43) Veröffentlichungstag der Anmeldung:
**05.04.89 Patentblatt 89/14**

(45) Bekanntmachung des Hinweises auf die
Patenterteilung:
**13.11.91 Patentblatt 91/46**

(84) Benannte Vertragsstaaten:
**CH DE FR GB GR IT LI NL SE**

(56) Entgegenhaltungen:
**EP-A- 0 184 036**
**FR-A- 2 585 523**
**US-A- 4 000 449**

(73) Patentinhaber: **SIEMENS
AKTIENGESELLSCHAFT
Wittelsbacherplatz 2
W-8000 München 2 (DE)**

(72) Erfinder: **Papiernik, Wolfgang, Dr.
Eskilstunastrasse 9
W-8520 Erlangen (DE)**
Erfinder: **Thomas, Baer, Dipl.-Ing.
Görlitzer Strasse 5
W-8520 Erlangen (DE)**
Erfinder: **Kirchner, Gerhard, Dipl.-Ing. (FH)
Thurnerstrasse 51
W-8551 Hausen (DE)**

## Beschreibung

Die Erfindung bezieht sich auf ein Verfahren zur numerisch gesteuerten Lageregelung von mindestens zwei, jeweils elektromotorisch angetriebenen Achsen, insbesondere für Achsen von Wälzfräsmaschinen, wobei die Lage jeder Achse durch Vorgabe von Lage-Sollwerten über einen jeweils eigenen Regelkreis mit einer Drehzahlregelstrecke einstellbar ist, wobei mindestens eine Folgeachse mit einem jeweils vorgegebenen Übersetzungsverhältnis synchron zur Drehbewegung mindestens einer Leitachse steuerbar ist und wobei jede Achse mit einem Werkstück oder Werkzeug bestückbar ist.

Bei verschiedenen Bearbeitungstechniken, wie beispielsweise bei der Zahnradherstellung durch Wälzfräsen oder Wälzstoßen, ist es erforderlich, eine Maschinenachse in Abhängigkeit von den Bewegungen mehrerer anderer Maschinenachsen zu bewegen. Dazu müssen unterschiedliche Übersetzungsverhältnisse zwischen den Achsen einstellbar sein.

Verfahren, bei denen die Drehbewegungen elektromotorisch angetriebener Achsen abhängig voneinander geregelt werden können, werden auch als "Elektronische Getriebe" bezeichnet.

In der europäischen Patentanmeldung 0184 036 A1 ist eine numerische Steuerung eines elektronischen Getriebes für Werkzeugmaschinen zum Herstellen von Verzahnungen beschrieben, wobei die Bewegung des Werkstücks von mindestens einer Bewegung des Werkzeugs derart abhängig gemacht ist, daß aus der Istposition des Werkzeugs eine Führungsgröße für den Lageregelkreis des Werkstücks abgeleitet wird.

Bei der Fertigung von hochpräzisen Teilen, wie dies bei der Herstellung von Zahnrädern mit dem Wälzfräsverfahren der Fall ist, werden hohe Anforderungen an die Synchronität der jeweils elektromotorisch angetriebenen Achsen gestellt. Wenn jedoch, wie bei der obengenannten europäischen Patentanmeldung erst aus der Istposition des Werkzeugs, d.h. aus der Istposition der einen Achse, die Sollgröße für den Lageregelkreis der anderen Achse abgeleitet wird, so ergibt sich dadurch zwangsläufig ein gewisser Nachlauf der zweiten Achse gegenüber der ersten Achse. Dies hat seine Ursache darin, daß die zweite Achse ihren Sollwert erst aus dem Istwert der ersten Achse, also erst nach einer bereits ausgeführten Drehbewegung der ersten Achse, erhält. Dieser sogenannte Schleppabstand kann zwar durch entsprechende Maßnahmen minimiert werden, kann aber systembedingt nie konstant auf Null gehalten werden.

Aufgabe der Erfindung ist es, ein Verfahren der eingangs genannten Art so auszugestalten, daß jeder systembedingte Schleppabstand vermieden wird.

Gemäß der Erfindung wird diese Aufgabe dadurch gelöst, daß alle Achsen durch Verwendung identisch strukturierter und spezifisch eingestellter Regelkreise gleiches dynamisches Verhalten aufweisen, daß sich der jeweilige Lage-Sollwert pro Zeiteinheit der jeweiligen Folgeachse aus dem mit dem jeweiligen Übersetzungsverhältnis gewichteten jeweiligen Lage-Sollwert pro Zeiteinheit der jeweiligen Leitachse ergibt, daß der resultierende Drehzahl-Istwert der jeweiligen Leitachse mit dem resultierenden Drehzahl-Istwert der jeweiligen Folgeachse unter Berücksichtigung des jeweiligen Übersetzungsverhältnisses verglichen wird und daß bei einer Differenz der resultierenden Drehzahl-Istwerte voneinander diese Differenz einem Zustandsausgleichsregler zugeführt wird, welcher einen entsprechenden Korrekturwert vorgibt, der über einen Vergleicher der Drehzahlregelstrecke der Folgeachse zur Nachregelung ihrer jeweiligen Drehzahl zugeführt wird.

Eine erste Ausbildung der Erfindung ist dadurch gekennzeichnet, daß bei einer Differenz der resultierenden Drehzahl-Istwerte die Drehzahlregelstrecke der jeweiligen Folgeachse über einen Zustandsausgleichsregler durch Vorgabe eines entsprechenden Strom-Sollwerts nachregelbar ist. Durch einen solchen direkten Eingriff in die Stromregelung können eventuelle Zeitverzögerungen, die sich durch vorgeschaltete Regelglieder ergeben, verringert werden.

Die jeweiligen Regelkreise können so ausgebildet sein, daß sich der Drehzahl-Sollwert einer jeweiligen Achse aus der Summe des direkt auf die jeweilige Drehzahlregelstrecke aufgeschalteten Lage-Sollwerts und einer Drehzahlregeldifferenz ergibt, wobei sich die Drehzahlregeldifferenz durch proportionale Verstärkung einer Lageregeldifferenz ergibt, wobei die Lageregeldifferenz aus der Istlage der jeweiligen Achse und dem zeitverzögerten und anschließend integrierten Lage-Sollwert bestimmbar ist und wobei die Zeitverzögerung des Lage-Sollwertes dem Einschwingverhalten der Drehzahlregelstrecke nachgebildet ist. Durch das direkte Aufschalten des Lage-Sollwerts auf die Drehzahlregelstrecke wird einerseits eine hohe Dynamik des Anlaufverhaltens des Motors erreicht, andererseits wird durch die zeitverzögerte Bildung der Lageregeldifferenz, die dem Einschwingverhalten der Drehzahlregelstrecke angepaßt ist, ein Überschwingen, d.h. ein Überfahren der vorgegebenen Lage vermieden.

Eine weitere Ausbildung der Erfindung ist dadurch gekennzeichnet, daß der Lage-Sollwert einer jeweiligen Achse aus einer vorgebbaren Umfangsgeschwindigkeit eines, an der jeweiligen Achse befestigten Werkstücks oder Werkzeugs durch Multiplikation mit dem Kehrwert des jeweiligen Radius des Werkstücks oder Werkzeugs mittels eines proportionalen Regelgliedes bestimmbar ist. Damit kann die Geschwindigkeit der jeweiligen Achse an sich ändernde Radien, beispielsweie bei kegelförmigen Werkstücken, angepaßt werden und eine

2

feste Relativgeschwindigkeit des Werkstücks zum Werkzeug eingehalten werden.

Befindet sich zwischen der Antriebswelle jedes Elektromotors und der jeweiligen durch den Elektromotor angetriebenen Achse ein mechanisches Getriebe aus mindestens zwei Zahnrädern, so können Getriebetoleranzen dadurch berücksichtigt werden, daß über eine Meßsystemkompensations-Einrichtung die Toleranzen beider Zahnräder in jeweils einer eigenen Tabelle erfaßt sind und daß unter Berücksichtigung der entsprechenden Toleranzwerte aus den Tabellen zu jeder vorgebbaren Werkzeug- oder Werkstückachslage die exakte Lage der Achse des Elektromotors bestimmbar ist. Fertigungstechnische Ungenauigkeiten von Zahnrädern, z.B. von Schneckentrieben oder Stirnrädern, können durch diese Maßnahme weitestgehend kompensiert werden.

Ein Ausführungsbeispiel der Erfindung ist in der Zeichnung dargestellt und wird im folgenden näher erläutert. Dabei zeigen :

FIG 1     einen Signalflußplan eines elektronischen Getriebes mit einem Regelkreis für eine Leitachse und einem Regelkreis für eine Folgeachse und

FIG 2     einen erweiterten Signalflußplan.

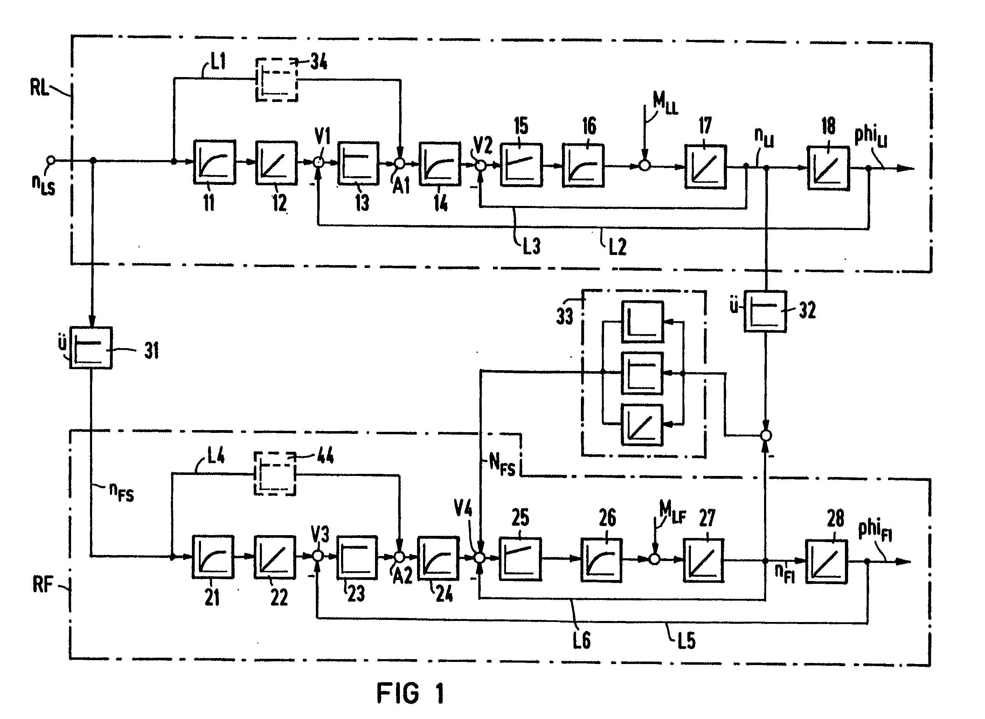

Die Darstellung gemäß FIG 1 zeigt einen Signalflußplan eines Regelkreises eines elektronischen Getriebes. Die Richtung des jeweiligen Signalflusses ist durch Pfeile angedeutet. Zur Kennzeichnung der wirkungsmäßigen Abhängigkeit des jeweiligen Ausgangssignals vom Eingangssignal, sind in jedem der Blöcke des Signalflußplans die jeweilige Übergangsfunktion eingezeichnet.

Der gesamte Regelkreis besteht aus jeweils einem Regelkreis RL für die Leitachse sowie einem Regelkreis RF für die Folgeachse, wobei beide Regelkreise RL und RF (gestrichelt dargestellt) identisch aufgebaut sind. Der Regelkreis der Folgeachse RF ist über ein mit dem Faktor ü gewichtetes Proportionalglied 31 sowie über ein entsprechendes Proportionalglied 32 und einen Zustandsausgleichsregler 33 mit dem Regelkreis der Leitachse RL verbunden. Jeder der beiden Regelkreise RL, RF verfügt dabei über eine Drehzahlregelstrecke mit den Regelgliedern 14 bis 17 für die Leitachse, bzw. 24 bis 27 für die Folgeachse. Die Drehzahlregelstrecken sind jeweils über eine Wirkungslinie L3 bzw. L6 zum Vergleicher V2 bzw. V4 rückgekoppelt. Die jeweilige Drehzahlregelstrecke 14 bis 17, 24 bis 27 ist Bestandteil eines Lageregelkreises, der zusätzlich aus den Proportionalreglern 13 bzw. 23 und aus dem Integrator 18 bzw. 28 gebildet ist, wobei der jeweilige Lage-Istwert der Winkellage der Leitachse $phi_{LI}$ bzw. der Folgeachse $phi_{FI}$ über die Wirkungslinie L2 bzw. L5 zum Vergleicher V1 bzw. V3 rückgekoppelt ist. Dem Lageregelkreis RL bzw. RF ist jeweils ein Integrator 12 bzw. 22, sowie ein Verzögerungsglied 11 bzw. 21, das beispielsweise ein PT1-Glied sein kann, vorgeschaltet. Eine Wirkungslinie L1 bzw. L4 überbrückt die Kettenstruktur der Regelglieder 11, 12 und 13 bzw. 21, 22 und 23 und führt auf den Addierer A1 bzw. A2. Auf die gestrichelt angedeuteten Proportionalglieder 34 bzw. 44 in den Wirkungslinien L1 bzw. L4 wird später noch eingegangen.

Die einzelnen Regler der identisch aufgebauten Regelkreise RL, RF der Leitachse sowie der Folgeachse sind so einstellbar, daß beide Regelstrecken gleiches dynamisches Verhalten, d.h. gleiche Einschwingzeiten, aufweisen. Dabei richtet man sich zweckmäßig nach der Regelstrecke mit dem schwächsten Motor.

Dem elektronischen Getriebe wird ein Drehzahl-Sollwert für die Leitachse als Lage-Sollwert $n_{LS}$ vorgegeben, dies bedeutet, daß pro Zeiteinheit die durch einen vorgegebenen Taktzyklus bestimmt ist, sich die Achse um einen bestimmten Drehwinkel verdrehen soll. Beträgt die Periodendauer des Zeittakts beispielsweise eine Millisekunde und gibt man einen Lage-Sollwert von 45° vor, so entspricht das einer achtel Umdrehung pro Millisekunde oder 7500 Umdrehungen pro Minute.

Der Drehzahl-Sollwert für die Folgeachse $n_{FS}$ ergibt sich aus dem Drehzahl-Sollwert für die Leitachse $n_{LS}$ durch Multiplikation mit einem bestimmten vorgebbaren Übersetzungsfaktor ü, der mittels des Proportionalgliedes 31 eingestellt werden kann, so daß gleichzeitig beide Regelkreise die gewünschte Drehzahl $n_{LS}$ bzw. $n_{FS}$ als Lage-Sollwert pro Zeiteinheit erhalten. Bei gleichem dynamischen Verhalten und bei ungestörtem Betrieb der beiden Regelkreise RL, RF ist damit eine mit dem vorgegebenen Übersetzungsverhältnis ü gewichtete, synchrone Drehbewegung der Achse sichergestellt.

Soll beispielsweise bei einer Wälzfräsmaschine eine Folgeachse in Abhängigkeit mehrerer Leitachsen geregelt werden, so kann der Lage-Sollwert der Folgeachse $n_{FS}$ auch aus der additiven Überlagerung mehrerer oder aller Lage-Sollwerte der Leitachsen gebildet werden. Selbstverständlich lassen sich auch in diesem Anwendungsfall die jeweiligen Lage-Sollwerte mit jeweils einem Übersetzungsverhältnis ü gewichten.

Im Fall einer Störung innerhalb des Systems, insbesondere der Drehzahlregelstrecke, die sich beispielsweise aus einem sich ändernden Lastmoment der Leitachse $M_{LL}$ und/oder aus einem sich ändernden Lastmoment der Folgeachse $M_{LF}$ ergeben könnte und zu einem asynchronen Betrieb führen würde, werden bei dem elektronischen Getriebe der Drehzahl-Istwert der Leitachse $n_{LI}$ und der Drehzahl-Istwert der Folgeachse $n_{FI}$ miteinander verglichen, wobei der Drehzahl-Istwert $n_{LI}$ vor dem Vergleich mit dem für die Folgeachse vorge-

3

gebenen Übersetzungsverhältnis ü über das Proportionalglied 32 gewichtet wird.

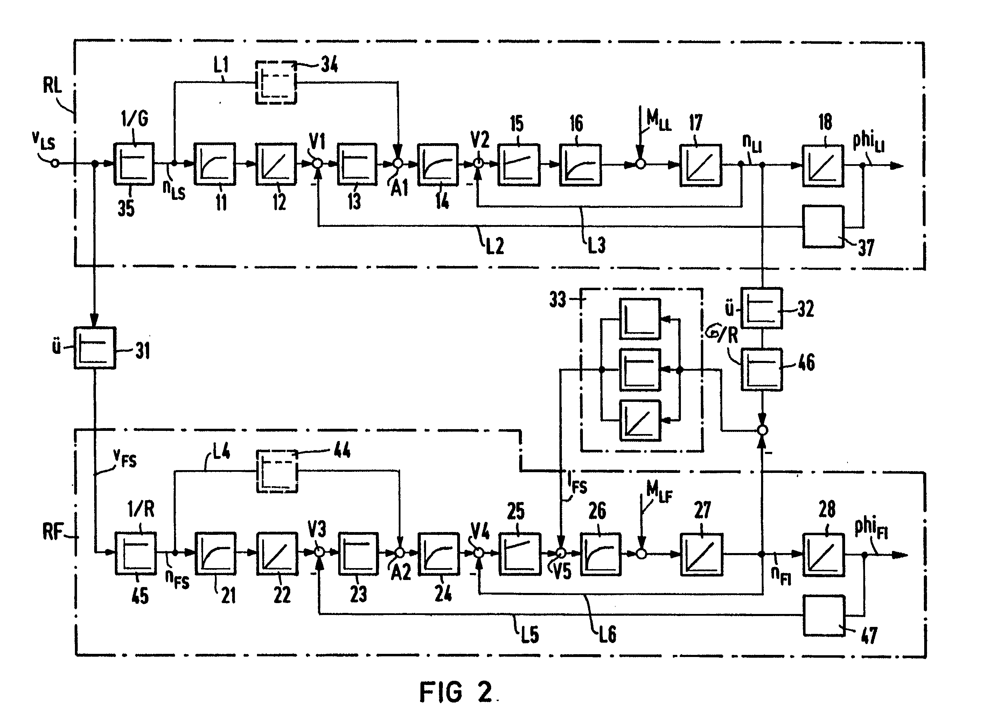

Bei einer, durch eine Störung bedingten Abweichung der Drehzahl-Istwerte $n_{LI}$, $n_{FI}$ voneinander, wird über einen Zustandsausgleichsregler 33 (gestrichelt gezeichnet), der als PID-Regler ausgebildet sein kann, ein entsprechender Drehzahl-Sollwert $N_{FS}$ an die Drehzahlregelstrecke der Folgeachse, d.h. an den Vergleicher V4 vorgegeben und so dafür gesorgt, daß die Drehzahl der Folgeachse nachgeregelt wird und damit die Differenz der Drehzahl-Istwerte $n_{LI}$, $n_{FI}$ und der Lage-Istwert $phi_{LI}$, $phi_{FI}$ zu Null wird. Durch den Zustandsausgleichsregler könnte auch ein Strom-Sollwert $I_{FS}$ vorgegeben werden, der direkt an das Regelglied 26 gegeben werden könnte. Diese Möglichkeit ist in der Darstellung gemäß FIG 2 gezeigt.

Die im folgenden beschriebene Ausbildung der Erfindung ist in gleicher Weise für jeden Regelkreis RL, RF vorgesehen und soll deshalb am Regelkreis RL für die Leitachse erläutert werden. Die entsprechenden Bezugszeichen des Regelkreises RF für die Folgeachse werden dabei in Klammern hinter den Bezugszeichen des Regelkreises RL für die Leitachse angegeben.

Zur Erzielung eines optimalen Einschwingverhaltens wird der LageSollwert pro Zeiteinheit $n_{LS}$ ($n_{FS}$) als Drehzahl-Sollwert über die Wirkungslinie L1 (L4) an den Addierer A1 (A2) und damit direkt an die Drehzahlregelstrecke, die aus den Regelgliedern 14 bis 17 (24 bis 27) besteht, vorgegeben. Durch diese direkte Drehzahlvorgabe beginnt der Motor unter Überwindung seiner ihm eigenen Trägheit anzulaufen. Die Motorträgheit bewirkt dabei, daß der nach dem Integrator 18 (28) vorliegende und über die Wirkungslinie L2 (L5) des Lageregelkreises zum Vergleicher V1 (V3) rückgekoppelte absolute Lage-Istwert stark vom ebenfalls am Vergleicher V1 vorliegenden absoluten Lage-Sollwert abweicht, so daß sich während der Regelzyklen des Einschwingvorgangs am Vergleicher V1 (V3) eine hohe Regeldifferenz ergibt und damit die Sollwert-Vorgabe für den Motor sich entsprechend erhöht. Dadurch wird einerseits ein sehr schnelles Anlaufverhalten des Motors erreicht, andererseits führt diese Art der Regelung jedoch zum Überschwingen, d.h. daß die Achse nicht nur bis zum vorgegebenen absoluten Lage-Sollwert drehen würde, sondern etwas darüber hinaus. Dies wird bei dem dargestellten elektronischen Getriebe dadurch verhindert, daß über das Regelglied 11 (21), das ein PT1-Glied sein kann, das Zeitverhalten der gesamten Drehzahlregelstrecke 14... 17 (24... 27) nachgebildet ist. Dadurch wird der jeweilige Lage-Sollwert $n_{LS}$ ($n_{FS}$) mit der Zeitverzögerung, die dem Anlaufverhalten des Motors entspricht, auf das den Integrator 12 (22) und damit als absoluter Lage-Sollwert auf den Vergleicher V1 (V3) gegeben.

An dieser Stelle sei nochmals darauf hingewiesen, daß der Begriff "Lage-Sollwert" den Lage-Sollwert pro Zeiteinheit, also eine Drehzahl bezeichnet. Dagegen ist mit dem Ausdruck "absoluter Lage-Sollwert" eine Winkellage einer Achse bezeichnet.

Durch diese, das Anlaufverhalten des Motors berücksichtigende dynamische Vorsteuerung wird erreicht, daß der am Vergleicher V1 (V3) ankommende Lage-Sollwert, dem über die Wirkungslinie 12 rückgekoppelten Lage-Istwert $phi_{LI}$ ($phi_{FI}$) relativ nahekommt und so die Regeldifferenz, die über den Proportionalregler 13 (23) als Drehzahl-Sollwert an den Addierer A1 gelangt, so gering gehalten wird, daß ein Überschwingen vermieden wird.

Durch einen in der Wirkungslinie L1 (L4) gestrichelt angedeuteten Proportionalregler 34 (44), kann dabei die dynamische Vorsteuerung und damit das Einschwingverhalten der gesamten Regelstrecke optimiert werden. Dabei zeigte es sich, daß mit einem Porportionalfaktor zwischen 0,7 und 0,9 am Proportionalregler 34 (44) ein gutes Einschwingverhalten erzielbar ist, wenn am PT1Glied 11 (21) das Zeitverhalten der Drehzahlregelstrecke mit dem Faktor 0,5 gewichtet, nachgebildet wird.

Im eingeschwungenen Zustand wird das Regelglied 11 (21) unwirksam, so daß der Drehzahlsollwert ohne Zeitverzögerung an den Integrator 12 (22) gelangt.

Die Darstellung gemäß FIG 2 zeigt ein elektronisches Getriebe, wobei zusätzlich zu den in FIG 1 dargestellten Elementen dem Regelkreis der Leitachse RL ein Proportionalglied 35 mit dem Faktor 1/G, dem Regelkreis der Folgeachse RF ein Proportionalregler 45 mit dem Faktor 1/R, vorgeschaltet ist. Außerdem enthalten die Rückkopplungszweige L2 und L5 der beiden Lageregelkreise jeweils eine Meßsystemkompensation 37 bzw. 47. Der Faktor 1/G im Regelkreis der Leitachse RL sowie der Faktor 1/R im Regelkreis der Folgeachse RF ist im Vergleichszweig der Drehzahl-Istwerte $n_{LI}$ ; $n_{FI}$ durch den Proportionalregler 46 mit dem Faktor G/R berücksichtigt.

Soll beispielsweise über den Regelkreis RL der Leitachse ein Werkzeugschlitten linear angetrieben werden, so kann für diesen Schlitten eine Soll-Geschwindigkeit $v_{LS}$anstelle einer Drehzahl an den Regelkreis RL der Leitachse vorgegeben werden. Diese Geschwindigkeit $v_{LS}$ wird dann durch das Proportionalglied 35 mit dem Kehrwert der Spindelsteigung 1/G der den Schlitten antreibenden Spindel multipliziert und dadurch der entsprechende Drehzahlsollwert bzw. Lagesollwert pro Taktzyklus gewonnen.

Auch für den Regelkreis der Folgeachse RF kann die Vorgabe einer Soll-Geschwindigkeit $v_{FS}$ sinnvoll sein. Ist beispielsweise an der Folgeachse ein kegelförmiges Werkstück befestigt und soll sich dieses Werkstück über die Höhe des Kegels mit einer konstanten Umfangsgeschwindigkeit bewegen, so muß dazu die Geschwindigkeit der Achse entsprechend dem sich ändernden Kegelradius angepaßt werden. Zu diesem Zweck kann dem Regelkreis der Folgeachse RF die gewünschte Umfangsgeschwindigkeit $v_{FA}$ vorgegeben werden. Durch das Proportionalglied 45 wird die Umfangsgeschwindigkeit $v_{FA}$ ständig mit dem Kehrwert 1/R des jeweiligen Werkstückradius, der über ein geeignetes Meßsystem zur Verfügung gestellt wird, multipliziert, so daß ein jeweils entsprechender Drehzahlsollwert an die eigentliche Regelstrecke gegeben wird. Selbstverständlich muß diese Multiplikation mit dem Kehrwert 1/R des jeweiligen Werkstückradius (Kegels) sowie die Spindelsteigung G auch beim Vergleich der Drehzahl-Istwerte $n_{LI}$, $n_{FI}$ berücksichtigt werden, wie es in FIG 2 durch das Proportionalglied 46 mit dem Faktor G/R dargestellt ist.

Ist an einer oder mehreren Achsen beispielsweise eine besonders langsame Drehzahl gewünscht, so kann es vorkommen, daß sich diese Drehzahl durch elektronische Regelung allein nicht erreichen läßt, so daß ein Untersetzungsgetriebe benötigt wird. Solche Getriebe weisen fertigungstechnische Toleranzen auf, die bei der Genauigkeit von heutigen Werkzeugmaschinen nicht unberücksichtigt bleiben können. Zur Kompensation dieser fertigungstechnischen Toleranzen kann in jedem Regelkreis, wie anhand der FIG 2 im Regelkreis der Leitachse RL sowie im Regelkreis der Folgeachse RF gezeigt, eine Meßsystemkompensation 37 bzw. 47 vorgesehen werden.

Sei beispielsweise die Leitachse durch ein Getriebe mit einem Schneckentrieb und einem Stirnrad untersetzt, so ergibt sich bei jeder Stellung des Stirnrads zu jeder Stellung des Schneckenrads eine, der jeweiligen Stellung beider Zahnräder zueinander entsprechende Kombination der Fertigungstoleranzen der einzelnen Zahnräder und damit eine von der gewollten Lage abweichende Achsstellung. Wird beispielsweise die Lagemeßung am Motor vorgenommen so kann zwar der Regelkreis seine Aufgabe, nämlich die Regeldifferenz des Lage-Istwerts zum Lage-Sollwert auszuregeln, erfüllt haben, die tatsächliche Achslage, d.h. die Istlage der Achse, kann aber wegen der Getriebetoleranzen trotzdem von der gewollten Stellung abweichen. Um dies zu vermeiden, wird die jeweilige Meßsystemkompensation 37 bzw. 47 so ausgebildet, daß die Toleranzen aller Zahnräder über den Umfang in jeweils einer Tabelle abgelegt werden und daß bei der Lageberechnung der Lage-Istwert der jeweiligen Achse $phi_{LI}$, $phi_{FI}$ zuerst mit der Tabelle des Motorzahnrades und dann mit der Tabelle des Lastzahnrades (Werkstückachse, Werkzeugachse) korrigiert wird, bevor er an den Vergleicher V1 bzw. V3 gegeben wird.

## Patentansprüche

1. Verfahren zur numerisch gesteuerten Lageregelung von mindestens zwei jeweils elektromotorisch angetriebenen Achsen, insbesondere für Achsen von Wälzfräsmaschinen, wobei die Lage jeder Achse durch Vorgabe von Drehzahl-Sollwerten als Lage-Sollwerte pro Zeiteinheit über einen jeweils eigenen Regelkreis mit einer Drehzahlregelstrecke einstellbar ist, wobei mindestens eine Folgeachse mit einem jeweils vorgegebenen Übersetzungsverhältnis (31, 32) synchron zur Drehbewegung mindestens einer Leitachse steuerbar ist und wobei jede Achse mit einem Werkstück oder Werkzeug bestückbar ist, **dadurch gekennzeichnet**, daß alle Achsen durch Verwendung identisch strukturierter und spezifisch eingestellter Regelkreise (RL, RF) gleiches dynamisches Verhalten aufweisen, daß sich der jeweilige Lage-Sollwert pro Zeiteinheit ($n_{FS}$) der jeweiligen Folgeachse aus dem mit dem jeweiligen Übersetzungsverhältnis (31) gewichteten jeweiligen Lage-Sollwert pro Zeiteinheit ($n_{LS}$) der jeweiligen Leitachse ergibt, daß der resultierende Drehzahl-Istwert ($n_{LI}$) der jeweiligen Leitachse mit dem resultierenden Drehzahl-Istwert ($n_{FI}$) der jeweiligen Folgeachse unter Berücksichtigung des jeweiligen Übersetzungsverhältnisses (32) verglichen wird und daß bei einer Differenz der resultierenden Drehzahl-Istwerte ($n_{LI}$, $n_{FI}$) voneinander diese Differenz einem Zustandsausgleichsregler (33) zugeführt wird, welcher eine entsprechenden Korrekturwert ($N_{FS}$, $I_{FS}$) vorgibt, der über einen Vergleicher ($V_4$; $V_5$) der Drehzahlregelstrecke (25... 27) der Folgeachse zur Nachregelung ihrer jeweiligen Drehzahl zugeführt wird.

2. Verfahren nach Anspruch 1, **dadurch gekennzeichnet**, daß sich der Drehzahl-Sollwert einer jeweiligen Achse aus der Summe des direkt auf die jeweilige Drehzahlregelstrecke (14... 17, 24... 27) aufgeschalteten Lage-Sollwerts ($n_{LS}$, $n_{FS}$) und einer Drehzahlregeldifferenz ergibt, wobei sich die Drehzahlregeldifferenz durch proportionale Verstärkung einer Lageregeldifferenz ergibt, wobei die Lageregeldifferenz aus der Istlage ($phi_{LI}$, $phi_{FI}$) der jeweiligen Achse und dem zeitverzögerten und anschließend integrierten Lage-Sollwert ($n_{LS}$, $n_{FS}$) bestimmbar ist und wobei die Zeitverzögerung (11, 21) des Lage-Sollwertes ($n_{LS}$, $n_{FS}$) dem Einschwingverhalten der Drehzahlregelstrecke (14... 17, 24... 27) nachgebildet ist.

3. Verfahren nach einem der vorstehenden Ansprüche, **dadurch gekennzeichnet**, daß der Lage-Sollwert ($n_{FS}$) einer jeweiligen Achse aus einer vorgebbaren Umfangsgeschwindigkeit ($V_{FS}$) eines an der jeweiligen Achse befestigten Werkstücks oder Werkzeugs, durch Multiplikation mit dem Kehrwert des jeweiligen Radius des Werkstücks oder Werkzeugs mittels eines proportionalen Regelgliedes (43) bestimmbar ist.

4. Verfahren nach einem der vorstehenden Ansprüche, **dadurch gekennzeichnet**, daß sich zwischen der

EP 0 309 824 B1

Antriebswelle jedes Elektromotors und der jeweiligen durch den Elektromotor angetriebenen Achse ein mechanisches Getriebe aus mindestens zwei Zahnrädern befindet, daß über eine Meßsystemkompensations-Einr ᴉ⋅-tung (37, 47) die Toleranzen beider Zahnräder in jeweils einer eigenen Tabelle erfaßt sind und daß u: ⋅⋅r Berücksichtigung der entsprechenden Toleranzwerte aus den Tabellen zu jeder vorgebbaren Werkzeug- oder Werkstückachslage die exakte Lage der Achse des Elektromotors bestimmbar ist.

**Revendications**

1. Procédé de régulation à commande numérique de la position d'au moins deux axes entraînés respectivement par des moteurs électriques, notamment pour des axes de machines à fraiser par développante, les positions de chaque axe pouvant être réglées au moyen de la prédétermination de valeurs de consigne de la vitesse réelle en tant que valeurs de consigne de position par unité de temps par l'intermédiaire d'un circuit de réglage respectif particulier possédant une gamme de réglage de la vitesse de rotation, et selon lequel au moins un axe asservi peut être commandé avec un rapport de transmission respectif prédéterminé (31, 32) en synchronisme avec le mouvement de rotation d'au moins un axe pilote et chaque axe peut être équipé d'une pièce à usiner ou d'un outil, caractérisé par le fait que tous les axes possèdent le même comportement dynamique en raison de l'utilisation de circuits de réglage (RL, RF) structurés de façon identique et réglés de façon spécifique, que la valeur de consigne respective de position par unité de temps ($n_{FS}$) de l'axe asservi respectif est obtenue à partir de la valeur de consigne respective de position par unité de temps ($n_{LS}$), pondérée par le rapport de transmission respectif (31), de l'axe pilote respectif, que la valeur réelle résultante de la vitesse de rotation ($n_{FI}$) de l'axe pilote respectif est comparée à la valeur réelle résultante de la vitesse de rotation ($n_{FI}$) de l'axe asservi respectif, compte tenu du rapport de transmission respectif (32) et que dans le cas où il existe une différence entre les valeurs réelles résultantes ($n_{LI}$, $n_{FI}$) de la vitesse de rotation, cette différence est envoyée à un régulateur de compensation d'état (32), qui prédétermine une valeur de correction correspondante ($N_{FS}$, $I_{FS}$), qui est envoyée par l'intermédiaire d'un comparateur (V4 ; V5) à la section de régulation de la vitesse de rotation (25...27) de l'axe asservi.

2. Procédé suivant la revendication 1, caractérisé par le fait que la valeur de consigne de la vitesse de rotation d'un axe respectif est formée par la somme de la valeur de consigne de position ($n_{LS}$, $n_{FS}$), appliquée à la section respective de réglage de la vitesse de rotation (14...17, 24...27), et d'une différence de réglage de la vitesse de rotation, cette différence de réglage de la vitesse de rotation étant obtenue au moyen d'une amplification proportionnelle d'une différence de réglage de position, qui peut être déterminée à partir de la position réelle ($phi_{LI}$, $phi_{FI}$) de l'axe respectif et de la valeur de consigne de position retardée et ensuite intégrée ($n_{LS}$, $n_{FS}$), le retard (11, 21) de la valeur de consigne de position ($n_{LS}$, $n_{FS}$) simulant le comportement transitoire de la section de régulation de la vitesse de rotation (14... 17 ; 24... 27).

3. Procédé suivant l'une des revendications précédentes, caractérisé par le fait que la valeur de consigne de position ($n_{FS}$) d'un axe respectif peut être déterminé à partir de la vitesse circonférentielle ($V_{FS}$), qui peut être prédéterminée, d'une pièce à usiner ou d'un outil fixé à l'axe respectif, par multiplication par l'inverse du rayon respectif de la pièce à usiner ou de l'outil au moyen d'un circuit de réglage proportionnel (43).

4. Procédé suivant l'une des revendications précédentes, caractérisé par le fait qu'entre l'arbre d'entraînement de chaque moteur électrique et l'axe respectif entraîné par un moteur électrique est disposée une transmission mécanique constituée par au moins deux pignons, que les tolérances des deux pignons sont recensées dans un tableau respectif particulier, par l'intermédiaire d'un dispositif (37, 47) de compensation du système de mesure et que la position précise de l'axe du moteur électrique peut être déterminée en tenant compte des valeurs de tolérances correspondantes, à partir des tableaux pour chaque position pouvant être prédéterminée de l'outil ou de la pièce à usiner.

**Claims**

1. Method for the numerically controlled position regulation of at least two shafts, each driven by an electric motor, in particular for shafts of hobbing machines, whereby the position of each shaft can be adjusted by the entry of desired speed values as desired position values per time unit by means of a respectively individual regulating circuit with a speed regulating path, whereby at least one slave shaft with a respectively specified transformation ratio (31, 32) is controllable synchronously to the rotary movement of at least one master shaft and whereby each shaft can be fitted with a workpiece or tool, characterized in that all shafts through the use of identically structured and specifically adjusted regulating circuits (RL, RF) have the same dynamic behaviour, in that the respective desired position value per time unit ($n_{FS}$) of the respective slave shaft results from the

6

respective desired position value per time unit ($n_{LS}$) of the respective master shaft, the desired position value being weighted with the respective transformation ratio (31), in that the resulting actual speed value ($n_{LI}$) of the respective master shaft is compared with the resulting actual speed value ($n_{FI}$) of the respective slave shaft with consideration of the respective transformation ratio (32) and in that with a difference of the resulting actual speed values ($n_{LI}$, $n_{FI}$) from one another this difference is supplied to a state compensating regulator (33), which specifies a corresponding correction value ($N_{FS}$, $I_{FS}$), which is supplied by means of a comparator (V4 ; V5) of the speed regulating path (25... 27) of the slave shaft, for the readjustment of its respective speed.

2. Method according to claim 1, characterized in that the desired speed value of a respective shaft results from the sum of the desired position value ($n_{LS}$, $n_{FS}$), applied directly to the respective speed regulating path (14... 17, 24... 27), and a speed regulating difference, whereby the speed regulating difference results by means of proportional amplification of a position regulating difference, whereby the position regulating difference can be determined from the actual position ($phi_{LI}$, $phi_{FI}$) of the respective shaft and the time-delayed and subsequently integrated desired position value ($n_{LS}$, $n_{FS}$) and whereby the time delay (11, 21) of the position desired value ($n_{LS}$, $n_{FS}$) is simulated from the transient behaviour of the speed regulating path (14 ... 17, 24... 27).

3. Method according to one of the above claims, characterized in that the desired position value ($n_{FS}$) of a respective shaft can be determined from a specifiable peripheral speed ($V_{FS}$) of a workpiece or tool fastened to the respective shaft, through multiplication with the reciprocal value of the respective radius of the workpiece or tool by means of a proportional regulating element (43).

4. Method according to one of the above claims, characterized in that between the drive shaft of each electric motor and the respective shaft driven by the electric motor there is located a mechanical gearing of at least two gear wheels, in that by means of a measuring system compensation device (37, 47) the tolerances of both gear wheels are determined in an individual table in each case and in that with consideration of the corresponding tolerance values from the tables to each specifiable tool or workpiece shaft position the exact position of the shaft of the electric motor can be determined.

FIG 1

EP 0 309 824 B1

FIG 2